# EUROPEAN PATENT APPLICATION

(11) **EP 3 907 648 A2**
(43) Date of publication of application: **10.11.2021**
(21) Application number: 21193300.7
(22) Date of filing: 26.08.2021
(51) Int. Cl.: G06F 40/258

(54) **TEXT PREDICTION METHOD AND APPARATUS, DEVICE AND STORAGE MEDIUM**

(30) Priority: 28.08.2020 CN 202010888432
(71) Applicant: Beijing Baidu Netcom Science and Technology Co., Ltd., Beijing 100085 (CN)
(72) Inventor: YANG, Chen, Beijing, 100085 (CN); YANG, Tianxing, Beijing, 100085 (CN); PENG, Bin, Beijing, 100085 (CN); ZHANG, Yilin, Beijing, 100085 (CN); SONG, Xunchao, Beijing, 100085 (CN)
(74) Representative: advotec.

(57) **Abstract**

The present disclosure provides a text prediction method, a text prediction apparatus, an electronic device and a storage medium, and relates to the field of data processing technologies, especially deep learning, natural language processing and intelligent search technologies. The method includes: obtaining (S110, S210, S310) at least two sentences by segmenting a text to be predicted; obtaining (S120, S220) at least one sentence set by grouping the at least two sentences based on a number of Central Processing Unit (CPU) cores in a target device, in which the target device is a device configured to perform a prediction operation; assigning (S130, S240, S340) each sentence set to a corresponding CPU core of the target device, and predicting each sentence set sentence by sentence through the corresponding CPU core to obtain a prediction result of each sentence set; and determining (S140, S250, S350) a prediction result of the text to be predicted based on the prediction result of each sentence set.

## Description

### TECHNICAL FIELD

The disclosure relates to the field of data processing techniques, specifically relates to deep learning, natural language processing and intelligent search technologies, and in particular to a text prediction method, a text prediction apparatus, an electronic device and a storage medium.

### BACKGROUND

Information related to cases may be scattered in different phrases of legal documents, which makes it difficult to systematically extract the information related to the case. When a user needs to view the information related to the case, all these documents need to be browsed one by one to manually extract useful information, thus the process is inefficient and part of the related information is easily ignored due to omission.

### SUMMARY

The embodiments of the disclosure provide a text prediction method, a text prediction apparatus, an electronic device and a storage medium.

Embodiments of an aspect of the disclosure provide a text prediction method. The method includes: obtaining at least two sentences by segmenting a text to be predicted; obtaining at least one sentence set by grouping the at least two sentences based on a number of Central Processing Unit (CPU) cores in a target device, in which the target device is a device configured to perform a prediction operation; assigning each sentence set to a corresponding CPU core of the target device, and predicting each sentence set sentence by sentence through the corresponding CPU core to obtain a prediction result of each sentence set; and determining a prediction result of the text to be predicted based on the prediction result of each sentence set.

Embodiments of another aspect of the disclosure provide a text prediction apparatus. The apparatus includes: a sentence extracting module, a sentence grouping module, a sentence predicting module and a result predicting module. The sentence extracting module is configured to obtain at least two sentences by segmenting a text to be predicted. The sentence grouping module is configured to obtain at least one sentence set by grouping the at least two sentences based on a number of Central Processing Unit (CPU) cores in a target device, the target device is a device configured to perform a prediction operation. The sentence predicting module is configured to assign each sentence set to a corresponding CPU core of the target device, and to predict each sentence set sentence by sentence through the corresponding CPU core to obtain a prediction result of each sentence set. The result predicting module is configured to determine a prediction result of the text to be predicted based on the prediction result of each sentence set.

Embodiments of another aspect of the disclosure provide an electronic device. The electronic device includes: at least one processor and a memory communicatively coupled to the at least one processor. The memory stores instructions executable by the at least one processor, and when the instructions are executed by the at least one processor, the at least one processor executes the method according to any one of embodiments of the disclosure.

Embodiments of another aspect of the disclosure provide a non-transitory computer-readable storage medium storing computer instructions, the computer instructions are configured to make a computer to execute the method according to any one of embodiments of the disclosure.

The technology of the disclosure improves CPU utilization of the target device, and prediction efficiency of the text is enhanced.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flowchart of a text prediction method according to an embodiment of the disclosure.
FIG. 2 is a flowchart of a text prediction method according to another embodiment of the disclosure.
FIG. 3 is a flowchart of a text prediction method according to yet another embodiment of the disclosure.
FIG. 4 is a flowchart of a text prediction method according to yet another embodiment of the disclosure.
FIG. 5 is a schematic diagram of a text prediction apparatus according to an embodiment of the disclosure.
FIG. 6 is a block diagram of an electronic device used to implement a text prediction method according to an embodiment of the disclosure.

### DETAILED DESCRIPTION

The following describes the exemplary embodiments of the disclosure with reference to the accompanying drawings, which includes various details of the embodiments of the disclosure to facilitate understanding, and shall be considered merely exemplary. Therefore, those of ordinary skill in the art should be aware that various changes and modifications can be made to the embodiments described herein. For clarity and conciseness, descriptions of well-known functions and structures are omitted in the following description.

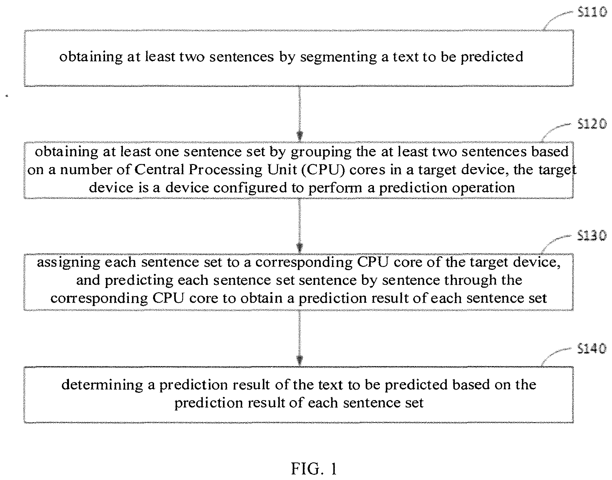

FIG. 1 is a flowchart of a text prediction method according to an embodiment of the disclosure. The embodiments of the disclosure may be applicable to a case of performing label prediction on the text. For example, the disclosure may be applicable to a case of performing multi-label prediction on legal documents. The method may be executed by a text prediction apparatus, which may be implemented by software and/or hardware. As illustrated in FIG. 1, the text prediction method according to embodiments of the disclosure includes the following.

At step S110, at least two sentences are obtained by segmenting a text to be predicted.

The text to be predicted may refer to a text on which label prediction is to be performed.

For example, the text to be predicted may be a legal document. The label may be information related to the case.

At step S120, at least one sentence set is obtained by grouping the at least two sentences based on a number of Central Processing Unit (CPU) cores in a target device, the target device is a device configured to perform a prediction operation.

For example, the target device may be a computer for predicting the text to be predicted.

Typically, the number of sentence sets obtained by grouping is the same as the number of CPU cores in the target device.

In an embodiment, if the sentence lengths of the at least two sentences obtained by segmentation are the same, the number of sentences in each sentence set after grouping is the same. If the sentence lengths of the at least two sentences obtained by segmentation are different, the number of sentences in each target sentence set may be the same or different.

At step S130, each sentence set is assigned to a corresponding CPU core of the target device, and each sentence set is predicted sentence by sentence through the corresponding CPU core to obtain a prediction result of each sentence set.

Each CPU core includes a sentence-granularity label prediction logic.

Optionally, the label prediction logic may be an existing label prediction logic or a pre-trained prediction model, which is not limited in this embodiment.

At step S140, a prediction result of the text to be predicted is determined based on the prediction result of each sentence set.

For example, the text to be predicted includes 4 sentences and the target device includes 2 CPU cores, correspondingly, the above method may be as follows. 4 sentences are obtained by segmenting the text to be predicted. The 4 sentences are grouped to obtain two sentence sets based on the 2 CPU cores in the target device. Each sentence set includes 2 sentences. One of the two sentence sets is assigned to one CPU core of the target device for sentence-by-sentence prediction, and the other one of the two sentence sets is assigned to the other CPU core of the target device for sentence-by-sentence prediction, to obtain a prediction result of each sentence. A prediction result of the text to be predicted is determined based on the prediction result of each of the 4 sentences.

In this embodiment of the disclosure, the at least two sentences are grouped based on the number of CPU cores in the target device, and each obtained sentence set is assigned to a corresponding CPU core for prediction operation, thus multiple CPU cores are configured for prediction, and prediction completion duration of each target sentence set in different CPU cores is the same, and prediction efficiency of determining the text to be predicted is improved while making full use of each CPU core.

In addition, with the embodiments of the disclosure, the accuracy of the prediction result is improved by predicting sentence by sentence, as the prediction accuracy rate of text granularity is lower than that of sentence granularity.

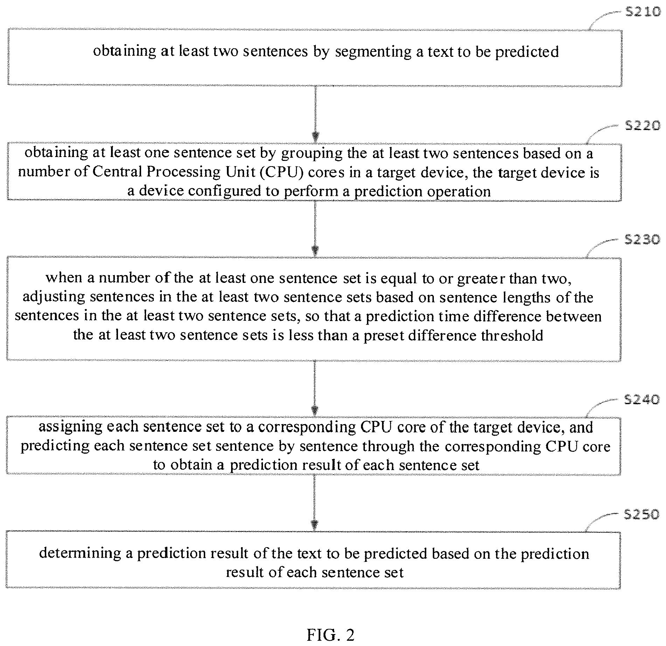

FIG. 2 is a flowchart of a text prediction method according to another embodiment of the disclosure. This embodiment is an extension of the above solution on the basis of the above embodiment. As illustrated in FIG. 2, the text prediction method according to embodiments of the disclosure includes the following.

At step S210, at least two sentences are obtained by segmenting a text to be predicted.

At step S220, at least one sentence set is obtained by grouping the at least two sentences based on a number of CPU cores in a target device, the target device is a device configured to perform a prediction operation.

At steps S230, when a number of the at least one sentence set is equal to or greater than two, sentences in the at least two sentence sets are adjusted based on sentence lengths of the sentences in the at least two sentence sets, so that a prediction time difference between the at least two sentence sets is less than a preset difference threshold.

The sentence length refers to the length of a sentence. The length of the sentence may be determined according to the number of words included in the sentence.

The prediction time difference refers to a difference between prediction time periods. The preset difference threshold refers to a maximum value of the prediction time difference between the at least two sentence sets when a prediction speed of the target device meets the requirements.

In detail, the preset difference threshold may be set according to actual requirements.

In an embodiment, adjusting the sentences in the at least two sentence sets based on the sentence lengths of the sentences in the at least two sentence sets may include: obtaining at least two total sentence lengths by summing sentence lengths of sentences in each of the at least two sentence sets respectively; and adjusting the sentences in the at least two sentence sets based on the at least two total sentence lengths.

The total sentence length refers to a sum of the sentence lengths of all sentences in a sentence set.

For example, a sentence set includes two sentences, and the sentence lengths of the two sentences are 5 and 10, respectively, then the total sentence length of the sentence set is 15.

Furthermore, adjusting the sentences in the at least two sentence sets based on the at least two total sentence lengths may include: comparing the at least two total sentence lengths; and moving a sentence in one of the at least two sentence sets to another sentence set of the at least two sentence sets based on a comparison result.

For example, the text to be predicted includes two sentence sets, a total sentence length of the first sentence set is 15, and a total sentence length of the second sentence set is 30. Then one sentence in the second sentence set is moved to the first sentence set, so that a difference between the total sentence length of the first sentence set and the total sentence length of the second sentence set after the movement is smaller than the preset difference threshold.

At step S240, each sentence set is assigned to a corresponding CPU core of the target device, and each sentence set is predicted sentence by sentence through the corresponding CPU core to obtain a prediction result of each sentence set.

At step S250, a prediction result of the text to be predicted is determined based on the prediction result of each sentence set.

With this solution, when the number of the at least one sentence set is equal to or greater than two, sentences in the at least two sentence sets are adjusted based on sentence lengths of the sentences in the at least two sentence sets, so that a prediction time difference between the at least two sentence sets is less than the preset difference threshold. Therefore, at least two CPU cores in the target device complete the prediction of each sentence set almost simultaneously, which further improves the prediction efficiency of the text to be predicted.

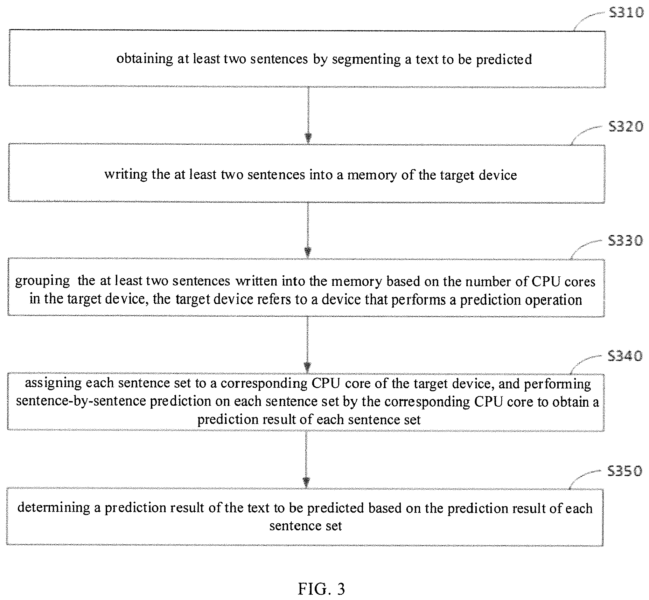

FIG. 3 is a flowchart of a text prediction method according to yet another embodiment of the disclosure. This embodiment is an extension of the above solution on the basis of the above embodiments. As illustrated in FIG. 3, the text prediction method according to embodiments of the disclosure includes the following.

At step S310, at least two sentences are obtained by segmenting a text to be predicted. At step S320, the at least two sentences are written into a memory of the target device.

At step S330, the at least two sentences written into the memory are grouped based on the number of CPU cores in the target device, the target device refers to a device that performs a prediction operation.

At step S340, each sentence set is assigned to a corresponding CPU core of the target device, and sentence-by-sentence prediction is performed on each sentence set by the corresponding CPU core to obtain a prediction result of each sentence set.

At step S350, a prediction result of the text to be predicted is determined based on the prediction result of each sentence set.

Optionally, the embodiments of the disclosure do not limit the execution order of the above steps. Optionally, step S330 may be executed before step S320.

This solution writes at least two sentences obtained by segmentation into the memory of the target device, thereby improving the prediction efficiency of the target device on the text to be predicted.

In order to avoid insufficient memory, before assigning each sentence set to the corresponding CPU core of the target device, the method further includes: determining the number of the at least two sentences; and obtaining at least two sentence sets by grouping the at least two sentences when the number of the at least two sentences is greater than or equal to a preset number threshold.

Correspondingly, writing the at least two sentences into the memory of the target device includes: writing one of the at least two sentence sets into the memory of the target device; and deleting data of the one of the at least two sentence sets from the memory after a prediction operation on the one of the at least two sentence sets is completed, and writing other of the at least two sentence sets into the memory of the target device sequentially.

Correspondingly, grouping the at least two sentences based on the number of CPU cores in the target device includes: grouping the sentence sets written to the memory based on the number of the CPU cores in the target device.

In an embodiment, if the number of sentences is less than the preset number threshold, triggering the execution of the step of writing the at least two sentences into the memory of the target device.

Based on the technical characteristics, the technical solution of the disclosure writes the segmented sentences into the memory in batches and performs prediction operation when there are a large amount of sentences obtained by segmentation. When number of the sentences obtained by segmentation is relative small, the sentences obtained by segmentation are written into the memory at one time, and prediction operation is performed, thus avoiding insufficient memory problems due to excessive memory usage.

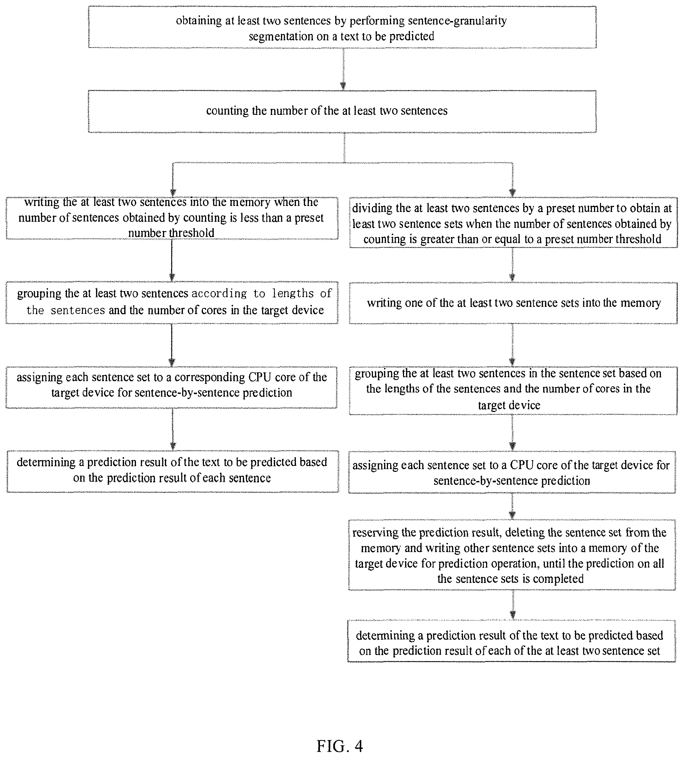

FIG. 4 is a flowchart of a text prediction method according to yet another embodiment of the disclosure. This embodiment is an extension of the above solution on the basis of the above embodiments. As illustrated in FIG. 4, the text prediction method according to embodiments of the disclosure includes the following. At least two sentences is obtained by performing sentence-granularity segmentation on a text to be predicted. The number of the at least two sentences is counted. If the number of sentences obtained by counting is less than a preset number threshold, the at least two sentences are written into the memory. The at least two sentences are grouped according to lengths of the sentences and a number of cores in the target device. Each sentence set is assigned to a corresponding core of the target device for sentence-by-sentence prediction. A prediction result of the text to be predicted is determined according to the prediction result of each sentence. If the number of sentences obtained by counting is greater than or equal to the preset number threshold, the at least two sentences is divided by a preset number to obtain at least two sentence sets. One sentence set of the at least two sentence sets is written into the memory, and the at least two sentences in the sentence set are grouped based on the lengths of the sentences and the number of cores in the target device. Each sentence set is assigned to a core of the target device for sentence-by-sentence prediction. The prediction result is saved, and the sentence set is deleted from the memory, and other sentence sets are written into the memory of the target device for prediction operation, until the prediction of all sentence sets is completed. The prediction result of the text to be predicted is determined according to the prediction result of each sentence in the at least two sentence sets.

Compared with the solutions in the related art, the prediction efficiency of this solution is significantly improved. If the number of sentences in the text to be predicted is large, and the number of CPU cores of the target device is large, then the CPU cores may be fully utilized based on this solution, so as to achieve a great performance index.

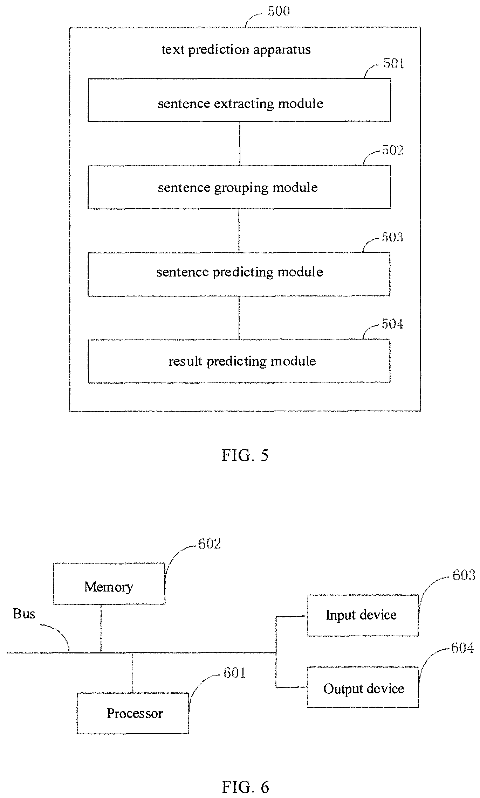

FIG. 5 is a schematic diagram of a text prediction apparatus 500 according to embodiments of the disclosure. As illustrated in FIG. 5, the text prediction apparatus 500 according to the embodiments of the disclosure includes: a sentence extracting module 501, a sentence grouping module 502, a sentence predicting module 503 and a result predicting module 504.

The sentence extracting module 501 is configured to obtain at least two sentences by segmenting a text to be predicted.

The sentence grouping module 502 is configured to obtain at least one sentence set by grouping the at least two sentences based on a number of Central Processing Unit (CPU) cores in a target device, the target device is a device configured to perform a prediction operation.

The sentence predicting module 503 is configured to assign each sentence set to a corresponding CPU core of the target device, and to predict each sentence set sentence by sentence through the corresponding CPU core to obtain a prediction result of each sentence set.

The result predicting module 504 is configured to determine a prediction result of the text to be predicted based on the prediction result of each sentence set.

In this embodiment of the disclosure, the at least two sentences are grouped based on the number of CPU cores in the target device, and assigned to each CPU core for prediction processing, thus multiple CPU cores are configured for prediction, and prediction completion duration of each target sentence set in different CPU cores is the same, and prediction efficiency of determining the text to be predicted is improved while making full use of the respective CPU cores.

In addition, the embodiments of the disclosure improve the accuracy of the prediction result by predicting sentence by sentence because that the prediction accuracy rate of text granularity is lower than that of sentence granularity.

The apparatus further includes a sentence adjusting module.

The sentence adjusting module is configured to, when a number of the at least one sentence set is equal to or greater than two, adjust sentences in the at least two sentence sets based on sentence lengths of the sentences in the at least two sentence sets, so that a prediction time difference between the at least two sentence sets is less than a preset difference threshold.

Further, the sentence adjusting module includes a sentence obtaining unit and a sentence adjusting unit.

The sentence obtaining unit is configured to obtain at least two total sentence lengths by summing sentence lengths of sentences in each of the at least two sentence sets respectively.

The sentence adjusting unit is configured to adjust the sentences in the at least two sentence sets based on the at least two total sentence lengths.

Further, the sentence adjusting module is configured to: compare the at least two total sentence lengths; and move a sentence in one of the at least two sentence sets to another sentence set of the at least two sentence sets based on a comparison result.

The apparatus further includes: a memory writing module.

The memory writing module is configured to write the at least two sentences into a memory of the target device.

The apparatus further includes: a number determining module and a sentence grouping module.

The number determining module is configured to determine a number of the at least two sentences.

The sentence grouping module is configured to obtain at least two sentence sets by grouping the at least two sentences when the number of the at least two sentences is greater than or equal to a preset number threshold.

Correspondingly, the memory writing module includes: a sentence writing unit and a memory exchanging module.

The sentence writing unit is configured to write one of the at least two sentence sets into the memory of the target device.

The memory exchanging module is configured to delete data of the one of the at least two sentence sets from the memory after a prediction operation on the one of the at least two sentence sets is completed, and to write other of the at least two sentence sets into the memory of the target device sequentially.

Further, the sentence grouping module includes: a sentence grouping unit.

The sentence grouping unit is configure to obtain the at least one sentence set by grouping the sentence set written into the memory based on the number of CPU cores in the target device.

According to the embodiments of the disclosure, the disclosure also provides an electronic device and a readable storage medium.

FIG. 6 is a block diagram of an electronic device used to implement a text prediction method according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 6, the electronic device includes: one or more processors 601, a memory 602, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the Graphical User Interface (GUI) on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 601 is taken as an example in FIG. 6.

The memory 602 is a non-transitory computer-readable storage medium according to the disclosure. The memory stores instructions executable by at least one processor, so that the at least one processor executes the method according to the disclosure. The non-transitory computer-readable storage medium of the disclosure stores computer instructions, which are used to cause a computer to execute the method according to the disclosure.

As a non-transitory computer-readable storage medium, the memory 602 is configured to store non-transitory software programs, non-transitory computer executable programs and modules, such as program instructions/modules (for example, the sentence extracting module 501, a sentence grouping module 502, a sentence predicting module 503 and a result predicting module 504 shown in FIG. 5) corresponding to the method in the embodiments of the disclosure. The processor 601 executes various functional applications and data processing of the electronic device by running non-transitory software programs, instructions, and modules stored in the memory 602, that is, implementing the method in the foregoing method embodiments.

The memory 602 may include a storage program area and a storage data area, where the storage program area may store an operating system and application programs required for at least one function. The storage data area may store data created according to the use of the electronic device for implementing the method. In addition, the memory 602 may include a high-speed random access memory, and a non-transitory memory, such as at least one magnetic disk storage device, a flash memory device, or other non-transitory solid-state storage device. In some embodiments, the memory 602 may optionally include a memory remotely disposed with respect to the processor 601, and these remote memories may be connected to the electronic device for implementing the method through a network. Examples of the above network include, but are not limited to, the Internet, an intranet, a local area network, a mobile communication network, and combinations thereof.

The electronic device used to implement the method may further include: an input device 603 and an output device 604. The processor 601, the memory 602, the input device 603, and the output device 604 may be connected through a bus or in other manners. In FIG. 6, the connection through the bus is taken as an example.

The input device 603 may receive inputted numeric or character information, and generate key signal inputs related to user settings and function control of an electronic device for implementing the method, such as a touch screen, a keypad, a mouse, a trackpad, a touchpad, an indication rod, one or more mouse buttons, trackballs, joysticks and other input devices. The output device 604 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system to solve management difficulty and weak business scalability defects of traditional physical hosts and Virtual Private Server (VPS) services.

The technology of the disclosure improves CPU utilization of the target device, and prediction efficiency of the text is enhanced.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

## Claims

1. A text prediction method, comprising:
obtaining (S110, S210, S310) at least two sentences by segmenting a text to be predicted;
obtaining (S120, S220) at least one sentence set by grouping the at least two sentences based on a number of Central Processing Unit (CPU) cores in a target device, wherein the target device is a device configured to perform a prediction operation;
assigning (S130, S240, S340) each sentence set to a corresponding CPU core of the target device, and predicting each sentence set sentence by sentence through the corresponding CPU core to obtain a prediction result of each sentence set; and
determining (S140, S250, S350) a prediction result of the text to be predicted based on the prediction result of each sentence set.

2. The method according to claim 1, wherein before assigning (S130, S240, S340) each sentence set to the corresponding CPU core of the target device, and predicting each sentence set sentence by sentence through the corresponding CPU core to obtain the prediction result of each sentence set, the method comprises:
when a number of the at least one sentence set is equal to or greater than two, adjusting (S230) sentences in the at least two sentence sets based on sentence lengths of the sentences in the at least two sentence sets, so that a prediction time difference between the at least two sentence sets is less than a preset difference threshold.

3. The method according to claim 2, wherein adjusting (S230) the sentences in the at least two sentence sets based on the sentence lengths of the sentences in the at least two sentence sets, comprises:
obtaining at least two total sentence lengths by summing sentence lengths of sentences in each of the at least two sentence sets respectively; and
adjusting the sentences in the at least two sentence sets based on the at least two total sentence lengths.

4. The method according to claim 2 or 3, wherein adjusting (S230) the sentences in the at least two sentence sets based on the at least two total sentence lengths, comprises:
comparing the at least two total sentence lengths; and
moving a sentence in one of the at least two sentence sets to another sentence set of the at least two sentence sets based on a comparison result.

5. The method according to any one of claims 1-4, before predicting (S130, S240, S340) each sentence set sentence by sentence through the corresponding CPU core to obtain a prediction result of each sentence set, further comprising:
writing (S320) the at least two sentences into a memory of the target device.

6. The method according to claim 5, before writing (S320) the at least two sentences into the memory of the target device, further comprising:
determining a number of the at least two sentences; and
obtaining at least two sentence sets by grouping the at least two sentences when the number of the at least two sentences is greater than or equal to a preset number threshold;
wherein, writing (S320) the at least two sentences into the memory of the target device comprises:
writing one of the at least two sentence sets into the memory of the target device; and
deleting data of the one of the at least two sentence sets from the memory after a prediction operation on the one of the at least two sentence sets is completed, and writing other of the at least two sentence sets into the memory of the target device sequentially.

7. The method according to any one of claims 1 to 6, wherein obtaining the at least one sentence set by grouping the at least two sentences based on the number of CPU cores in the target device comprises:
obtaining the at least one sentence set by grouping the sentence set written into the memory based on the number of CPU cores in the target device.

8. A text prediction apparatus (500), comprising:
a sentence extracting module (501), configured to obtain at least two sentences by segmenting a text to be predicted;
a sentence grouping module (502), configured to obtain at least one sentence set by grouping the at least two sentences based on a number of Central Processing Unit (CPU) cores in a target device, wherein the target device is a device configured to perform a prediction operation;
a sentence predicting module (503), configured to assign each sentence set to a corresponding CPU core of the target device, and to predict each sentence set sentence by sentence through the corresponding CPU core to obtain a prediction result of each sentence set; and
a result predicting module (504), configured to determine a prediction result of the text to be predicted based on the prediction result of each sentence set.

9. The apparatus (500) according to claim 8, further comprising:
a sentence adjusting module, configured to, when a number of the at least one sentence set is equal to or greater than two, adjust sentences in the at least two sentence sets based on sentence lengths of the sentences in the at least two sentence sets, so that a prediction time difference between the at least two sentence sets is less than a preset difference threshold.

10. The apparatus (500) according to claim 9, wherein the sentence adjusting module comprises:
a sentence obtaining unit, configured to obtain at least two total sentence lengths by summing sentence lengths of sentences in each of the at least two sentence sets respectively; and
a sentence adjusting unit, configured to adjust the sentences in the at least two sentence sets based on the at least two total sentence lengths.

11. The apparatus (500) according to claim 9 or 10, wherein the sentence adjusting module is specifically configured to:
compare the at least two total sentence lengths; and
move a sentence in one of the at least two sentence sets to another sentence set of the at least two sentence sets based on a comparison result.

12. The apparatus (500) according to any one of claims 8-11, further comprising:
a memory writing module, configured to write the at least two sentences into a memory of the target device.

13. An electronic device, comprising:
at least one processor; and
a memory communicatively connected to the at least one processor; wherein,
the memory stores instructions executable by the at least one processor, and the instructions are executed by the at least one processor, so that the at least one processor is caused to execute the method according to any one of claims 1-7.

14. A non-transitory computer-readable storage medium storing computer instructions, wherein the computer instructions are configured to make the computer execute the method according to any one of claims 1-7.

15. A computer program product having computer instructions stored thereon, wherein the computer instructions are configured to cause a computer to perform the method according to any of claims 1 to 7.
